# FASCICULE DE BREVET EUROPEEN

(11) **EP 1 153 377 B1**
(45) Date de publication et mention de la délivrance du brevet: **02.01.2003**
(21) Numéro de dépôt: 99954058.6
(22) Date de dépôt: 04.11.1999
(51) Int. Cl.: G07F 7/10

(54) **CARTE A PUCE CHARGEABLE AVEC DES DONNEES COMPRESSEES**
CHIPKARTE MIT KOMPRIMIERTEN DATEN LADBAR
CHIP CARD LOADABLE WITH COMPRESSED DATA

(30) Priorité: 01.12.1998 FR 9815257
(43) Date de publication de la demande: 14.11.2001
(73) Titulaire: Gemplus, 13881 Gémenos Cedex (FR)
(72) Inventeur: BRIEUSSEL, Benoît, F-3500 Rennes (FR)
(86) Numéro de dépôt international: FR9902694
(87) Numéro de publication internationale: WO00033266

(56) Documents cités:
- FR-A- 2 730 330
- FR-A- 2 759 795
- US-A- 5 499 293
- US-A- 5 796 829

## Description

La présente invention concerne d'une manière générale le traitement de données reçues dans une carte à puce, dite également carte à microcalculateur ou microprocesseur (smart card).

Les prestataires de services gérant les cartes à puce requièrent de plus en plus de stocker un grand nombre de données dans la mémoire non volatile de type EEPROM, ou EEPROM Flash contenue dans la carte à puce. Les besoins en capacité de mémoire dans les cartes à puce ont tendance également à s'accroître à cause de l'usage de certains logiciels écrits dans des langages de programmation, tels que le langage JAVA, pour lesquels des parties de programmes, telles que des applets, sont à télécharger dans les cartes.

Afin de fixer les idées, si l'on transmet 5 koctets dans chacune d'1 million de cartes avec un seul terminal qui fonctionne 24h/24 et 7j/7 et dont le débit est de 9600 bit/s, il faut plus de deux mois pour charger ces données dans les cartes.

En radiotéléphonie, la carte à puce est intégrée en tant que carte SIM (Subscriber Identify Module) dans les terminaux radiotéléphoniques portables. L'état actif du terminal radiotéléphonique et donc sa consommation en courant et son autonomie dépendent notamment du temps de transmission de données à traiter par la carte SIM.

D'une manière plus générale, la diminution du temps de transmission de données à télécharger dans les cartes à puce est un gain incontestable vis-à-vis aussi bien du terminal chargeant les données dans la carte à puce que vis-à-vis de la carte elle-même et du ou des supports ou canaux de transmission transitant les données à télécharger.

Par ailleurs la demande de brevet japonais déposée le 24 Février 1995 sous le n° 7-60087 et publiée sous le n° 8-235329 propose de télécharger des données compressées dans une carte à mémoire, c'est-à-dire dans une carte « statique » qui ne traite pas les données qu'elle reçoit et qui fait office de mémoire déportée par rapport à une unité de traitement d'images ayant produit les données compressées. L'unité de traitement d'images écrit à deux premières adresses prédéterminées dans la carte à mémoire respectivement la longueur des données avant compression, puis écrit les données compressées dans la carte à mémoire. Inversement, lors du chargement des données compressées de la carte à mémoire dans l'unité de traitement d'images, l'unité de traitement d'images lit la longueur des données avant compression et la longueur des données après compression aux deux adresses respectives précitées, puis lit les données compressées de manière à les décompresser suivant un algorithme de décompression prédéterminé installé dans l'unité de traitement d'images.

D'autres documents, tels que les demandes de brevet français 2 730 330 ou 2 759 795 concernent la compression de données dans une carte à puce mais sans pour cela divulguer la manière dont s'effectue la compression ni la décompression de données dans la carte.

L'objectif de l'invention est de diminuer le temps de téléchargement de données dans des cartes à puce, c'est-à-dire des cartes à microcalculateur ou microprocesseur, en y chargeant des données compressées, tout en conservant les fonctionnalités des cartes à puce en matière de traitement de données non compressées.

A cette fin, une carte à puce propre à recevoir des champs de données compressées précédés chacun par une indication de longueur attendue de données décompressées et une longueur de données compressées, est caractérisée en qu'elle comprend un premier moyen pour mémoriser les champs reçus de données compressées en fonction des longueurs des données compressées respectives, un deuxième moyen pour mémoriser un algorithme de décompression, un moyen pour décompresser suivant ledit algorithme de décompression les données compressées dans chaque champ en des données décompressées sur une longueur dépendant de l'indication de longueur de données décompressées, et un troisième moyen pour mémoriser les données décompressées.

Grâce à la réception de données à l'état compressé dans les cartes à puce selon l'invention, la durée de chargement de 5 koctets dans un million de ces cartes selon l'exemple précité est réduite de 10% à 40%, typiquement de 20% pour un gain de deux semaines environ.

De préférence, le deuxième moyen pour mémoriser contient plusieurs algorithmes de décompression et le moyen pour décompresser détecte un numéro d'algorithme de décompression précédant chaque champ reçu de données compressées afin que celles-ci soient décompressées suivant l'algorithme de décompression dont le numéro a été détecté. En variante, le deuxième moyen pour mémoriser peut comprendre plusieurs modèles de décompression respectivement associés aux algorithmes de décompression, et le moyen pour décompresser détecte un numéro de modèle de décompression précédant chaque champ reçu de données compressées afin que celles-ci soient décompressées suivant l'algorithme de décompression et le modèle de décompression correspondant dont les numéros ont été détectés. Les divers algorithmes de décompression et modèles de décompression installés en mémoire dans la carte permettent à la carte d'être utilisée par n'importe quel prestataire de service gérant des terminaux ou des serveurs compressant des données selon l'un des algorithmes et l'un des modèles.

Selon une autre caractéristique de l'invention, la carte à puce comprend un quatrième moyen pour mémoriser un modèle de décompression reçu précédemment à un champ reçu de données compressées, et le moyen pour décompresser détecte un numéro d'algorithme de décompression précédant ledit champ reçu de données compressées afin que celles-ci soient décompressées suivant l'algorithme de décompression dont le numéro a été détecté et le modèle de décompression lu dans le quatrième moyen pour mémoriser.

Selon une autre possibilité, le modèle de décompression est reconstruit en mémoire RAM de la carte ; dans ce cas, le quatrième moyen pour mémoriser mémorise un modèle de décompression déduit implicitement d'un champ de données compressées en cours d'écriture dans les premiers moyens pour mémoriser, et le moyen pour décompresser détecte un numéro d'algorithme de décompression précédant ledit champ mémorisé de données compressées afin que celles-ci soient décompressées suivant l'algorithme de décompression dont le numéro a été détecté et le modèle de décompression déduit lu dans le quatrième moyen pour mémoriser.

Le moyen pour décompresser peut détecter une indication sur l'état compressé ou non compressé de chaque champ reçu de données compressées afin que le moyen pour décompresser ne décompresse les données que dans les champs de données précédés par une indication d'état compressé.

L'invention concerne également une unité de données de protocole pour être reçue notamment par la carte à puce. selon l'invention. L'unité comprend un en-tête et un champ de données, l'en-tête incluant la longueur du champ de données, et est caractérisée en ce que l'en-tête comprend une indication sur la longueur attendue de données décompressées après décompression du champ de données. Cette caractéristique contribue à décompresser précisément, quel que soit l'algorithme de décompression sélectionné.

L'indication sur la longueur attendue de données décompressées est un mot à n bits égal à la longueur attendue des données décompressées modulo 2ⁿ, la longueur attendue étant exprimée en mots de données décompressées à m bits. L'entier n est au moins égal à 0, par exemple égal à 2, 3 ou 4 bits en fonction de la répartition de paramètres de décompression dans un champ de l'unité de protocole. L'entier m est au moins égal à 1, par exemple égal à 8 pour des mots tels qu'octets.

Lorsque la carte est multiprestataire de service, l'en-tête comprend le numéro d'un algorithme de décompression au moyen duquel les données compressées dans le champ de données sont à décompresser, et peut comprendre le numéro d'un modèle de décompression qui correspond à l'algorithme de décompression dont le numéro est inclus dans l'en-tête et au moyen duquel les données compressées dans le champ de données sont à décompresser.

La carte peut recevoir des données compressées et des données non compressées.

A cet effet, l'en-tête comprend une indication d'état de données ayant un premier état lorsque les données dans le champ de données ne sont pas compressées, et ayant un deuxième état lorsque les données dans le champ de données sont compressées. L'indication d'état de données peut avoir un troisième état lorsque les données dans le champ de données sont à décompresser suivant un algorithme de décompression prédéterminé et un modèle de décompression prédéterminé qui peuvent être choisis par défaut dans la carte ; l'indication sur la longueur attendue de données décompressées n'est pas alors toujours nécessaire à la décompression et peut ne pas être dans l'unité de données de protocole. Dans le cas contraire, l'en-tête comprend le numéro d'un algorithme de décompression, le numéro d'un modèle de décompression et l'indication sur la longueur attendue de données décompressées lorsque l'indication d'état de données est au deuxième état.

Enfin l'invention concerne également un procédé pour décompresser des champs de données compressées à mettre en oeuvre notamment dans la carte à puce selon l'invention. Chaque champ de données compressées est précédé par une indication sur la longueur de données non compressées correspondant à des données compressées contenues dans le champ et par une longueur des données compressées contenues dans le champ. Le procédé est caractérisé par les étapes suivantes :
- détecter la longueur des données compressées et mémoriser le champ de données compressées sur la longueur détectée, et
- détecter l'indication sur la longueur attendue de données décompressées et décompresser les données de manière à arrêter la décompression en fonction de l'indication détectée.

Le procédé peut comprendre pour une application multiprestataire de service, une étape de sélectionner un algorithme de décompression parmi plusieurs algorithmes de décompression en fonction d'un numéro d'algorithme précédant le champ de données compressées afin de décompresser les données du champ suivant l'algorithme de décompression sélectionné, et le cas échéant une étape de sélectionner un modèle de décompression parmi plusieurs modèles de décompression associés à l'algorithme de décompression sélectionné en fonction d'un numéro de modèle précédant le champ de données compressées afin de décompresser les données du champ suivant l'algorithme de décompression sélectionné et le modèle de décompression sélectionné.

A la place de l'étape de sélectionner un modèle de décompression, le procédé peut comprendre une étape de mémoriser un modèle de décompression reçu précédemment au champ de données compressées afin de décompresser les données du champ suivant l'algorithme de décompression sélectionné et le modèle de décompression mémorisé, ou bien une étape de mémoriser un modèle de décompression déduit implicitement du champ reçu de données compressées afin de décompresser les données du champ suivant l'algorithme de décompression sélectionné et le modèle de décompression déduit et mémorisé.

Le procédé peut encore comprendre une étape de détecter une indication d'état de données précédant chaque champ de données décompressées afin de ne décompresser les données du champ que lorsque l'indication d'état de données n'est pas à un premier état prédéterminé.

De préférence, l'étape de détecter une indication sur la longueur attendue de données décompressées n'est pas effectuée lorsque l'indication d'état de données est à un état prédéterminé indiquant que les données compressées sont à décompresser selon des algorithme et modèle prédéterminés, sélectionnés par défaut dans la carte.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une bloc-diagramme d'un système de transmission entre une carte à puce selon l'invention et un terminal à compresseur de données selon une première réalisation ;
- la figure 2 est une bloc-diagramme d'un système de radiotéléphonie entre une carte à puce selon l'invention et un serveur à compresseur de données selon une deuxième réalisation ;
- la figure 3 est un diagramme montrant une trame de données compressées selon l'invention ;
- la figure 4 est un diagramme d'un champ de paramètres de décompression inclus dans la trame de la figure 3 ;
- la figure 5 est un algorithme d'un procédé de compression de données selon l'invention ; et
- la figure 6 est un algorithme d'un procédé de décompression de données selon l'invention.

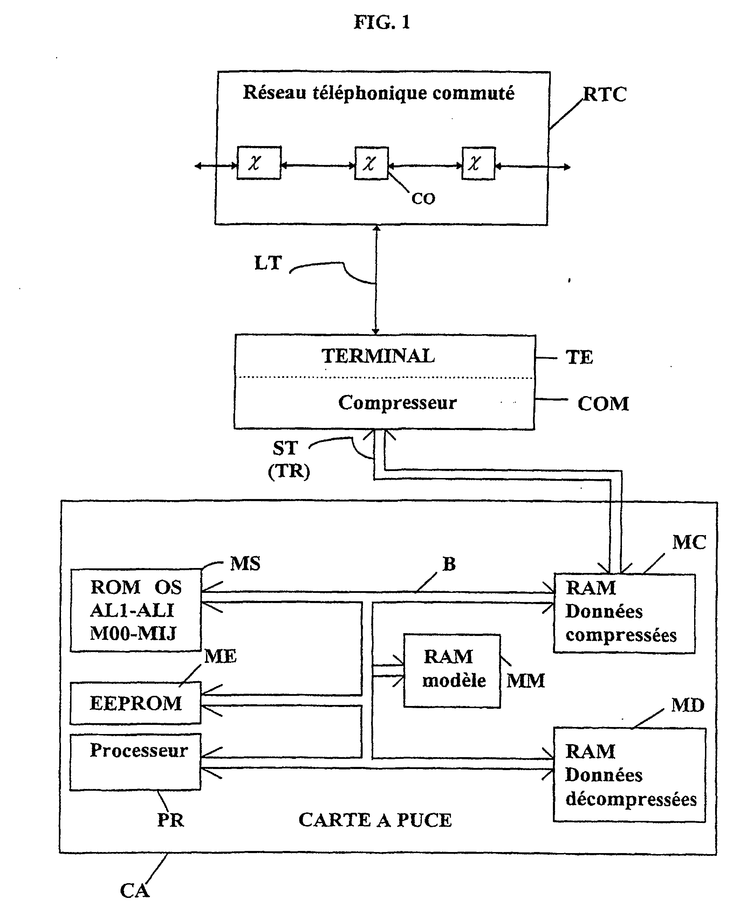

Selon une première réalisation montrée à la figure 1, un terminal à lecteur de carte TE comprend un compresseur de données COM pour compresser des données qu'il a traitées en interne que le terminal soit autonome ou non, ou bien qu'il a reçues d'une ligne de transmission, par exemple une ligne téléphonique d'abonné LT desservie par un autocommutateur CO du réseau téléphonique commuté RTC ou d'un réseau numérique à intégration de services RNIS. Les données compressées sont transmises dans des trames TR selon l'invention par le terminal à une carte à puce CA à travers un support de transmission ST de type ligne de transmission filaire ou radioélectrique ou de type contacts électriques, magnétiques ou inductifs par exemple. La carte à puce décompresse selon l'invention les données compressées incluses dans les trames reçues TR.

Schématiquement, la puce de la carte comprend une mémoire RAM MC pour mémoriser les trames reçues à données compressées ou non compressées, une mémoire RAM MD pour mémoriser les données décompressées, une mémoire ROM MS incluant le système d'exploitation OS (Operating System) de la carte et des applications spécifiques notamment selon l'invention, une mémoire EEPROM ME pour conserver notamment des protocoles de transmission/réception de données, des informations confidentielles et des données décompressées et non compressées, et un microprocesseur PR relié aux mémoires par un bus B.

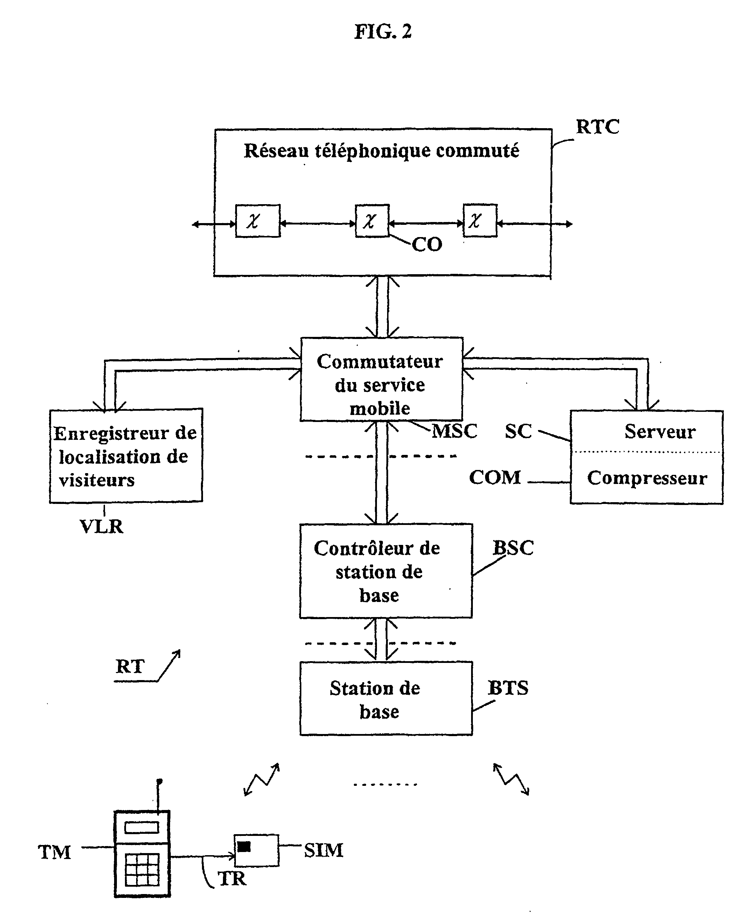

Selon une deuxième réalisation montrée à la figure 2, le terminal à carte est un terminal radiotéléphonique mobile TM dans un réseau de radiotéléphonie cellulaire RT, par exemple de type GSM 900 ou DCS 1800. La carte à mémoire est une carte SIM, c'est-à-dire un module d'identification d'abonné (Subscriber Identify Module) ayant une architecture analogue à la carte CA montrée à la figure 2 et sensiblement modifiée et complétée selon l'invention. Afin de ne pas surcharger en logiciel le terminal mobile TM, celui-ci ne compresse pas les données qu'il reçoit pour les transmettre à la carte SIM mais reçoit ces données déjà compressées à travers le canal de trafic alloué depuis la station de base correspondante BTS.

Dans le réseau RT montré à la figure 2 ne sont représentées que les entités principales à travers lesquelles des données destinées à la carte SIM transitent. Ces entités sont un commutateur du service mobile MSC relié à au moins un commutateur téléphonique à autonomie d'acheminement CO du réseau téléphonique commuté RTC et gérant des communications pour des terminaux mobiles visiteurs, parmi lesquels le terminal TM, qui se trouvent à un instant donné dans une zone de localisation respective ; un enregistreur de localisation de visiteurs VLR relié au commutateur MSC et contenant des caractéristiques des terminaux mobiles, en fait des cartes SIM, dans cette zone de localisation ; un contrôleur de station de base BSC gérant notamment l'allocation de canaux à des terminaux mobiles, la puissance de station(s) de base et des transferts intercellulaires de stations mobiles ; et la station de base BTS couvrant la cellule radioélectrique où le terminal TM se trouve à l'instant donné.

Dans cette deuxième réalisation, le compresseur de données COM est inclus dans un serveur de compression SC qui est relié au commutateur du service mobile MSC à travers une interface RNIS classique, par exemple de type T2 à 2048 kbit/s avec 30 canaux d'information B et 1 canal D à 64 kbit/s. Toutes les données entrantes à compresser destinées aux terminaux mobiles se trouvant dans ladite zone de localisation pour des communications quelconques avec des terminaux fixes du réseau RTC ou des terminaux mobiles du réseau de radiotéléphonie RT sont compressées dans le serveur SC avant de transiter dans le contrôleur BSC, la station de base BTS et le terminal mobile TM correspondants.

En variante, le serveur SC n'est pas relié au commutateur de service mobile MSC, mais est remplacé par des serveurs à compresseur reliés respectivement aux contrôleurs de station de base BSC desservis par le commutateur MSC.

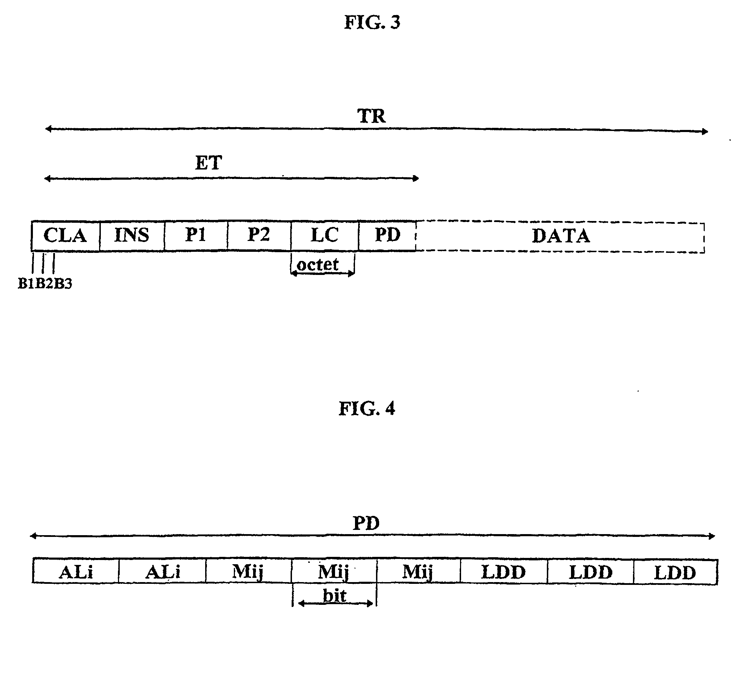

En se référant maintenant aux figures 3 et 4, une unité de données de protocole sous la forme d'une trame de données compressées TR à transmettre depuis le terminal TE, TM vers la carte CA, SIM à travers le support de transmission ST, ou depuis le serveur de compression SC à travers notamment le terminal TM selon la figure 2, présente une structure avec un en-tête EN et un champ de données DATA. La trame TR est sensiblement modifiée par rapport à une trame normalisée de données entrantes selon le protocole de transmission asynchrone caractère par caractère "T = 0". Au lieu de cinq octets, l'en-tête ET de la trame TR comprend cinq octets CLA, INS, P1, P2 et LC comme dans une trame "T = 0" et un sixième octet PD contenant des paramètres de décompression selon l'invention, "prélevé" dans le champ de données. Ces six octets sont en code hexadécimal.

Comme dans la trame "T = 0", l'octet CLA désigne une classe de l'instruction contenue dans l'octet suivant, l'octet INS une instruction liée à une commande du système d'exploitation OS (Operating System) de la carte à puce CA, SIM ou liée à la sécurité des données par exemple, les octets P1 et P2 des paramètres de l'instruction, et l'octet LC la longueur du champ de données dans la trame "T = 0" exprimée en octets et égale, pour la plupart des trames à données compressées selon l'invention, à la longueur du champ DATA de la trame TR augmentée de 1 dû à l'octet PD.

Selon l'invention, la trame TR contient deux bits d'indication d'état de données B2 et B3, le deuxième et le troisième de l'octet CLA, qui sont produits dans le compresseur COM du terminal TE ou du serveur SC pour indiquer principalement l'état compressé ou non compressé des données dans le champ DATA. Les bits d'indication d'état de données B2 et B3 ont les états binaires respectifs suivants :
- "00" lorsque les données sont reçues non compressées, la trame TR étant alors une trame "T = 0" avec l'octet PD comme octet de données ;
- "10" lorsque les données sont reçues compressées et sont à décompresser dans la carte selon des algorithme AL0 et modèle M00 de décompression prédéterminés, les plus usités, sélectionnés par défaut dans la carte à puce CA, SIM, la trame TR étant alors une trame "T = 0" lorsque la longueur des données décompressées n'est pas nécessaire à la décompression ; et
- "11" lorsque les données sont reçues compressées et sont à décompresser dans la carte selon l'un sélectionné ALi de plusieurs algorithmes de décompression et l'un sélectionné Mij de plusieurs modèles de décompression adaptés à l'algorithme sélectionné ALi, les algorithme et modèle de décompression ALi et Mij correspondant aux algorithme et modèle de compression "ALi" et "Mij" utilisés dans le terminal TE ou le serveur SC pour compresser initialement dans les données.

Ainsi, selon l'invention, la mémoire ROM MS de la carte à puce qui contient principalement le système d'exploitation OS de la carte, contient également plusieurs applications relatives à des algorithmes de décompression AL0 à ALI avec l'indice i compris entre 0 et un entier I typiquement égal au plus à 3, chaque algorithme ALi étant associé à plusieurs modèles de compression respectifs Mi0 à MiJ avec l'indice j compris entre 0 et un entier J typiquement égal au plus à 7. Un modèle de décompression assure la correspondance entre les symboles compressés et les symboles non compressés grâce à l'algorithme de décompression qui le met en oeuvre ; par exemple un modèle est basé sur un arbre, une table probabiliste, un dictionnaire, ou une liste. L'identification de l'algorithme ALi et l'identification du modèle Mij servant à décompresser les données DATA sont signalées à la carte CA, SIM respectivement par un mot à 2 bits et un mot à 3 bits au début de l'octet de paramètres de décompression PD, comme montré à la figure 4, lorsque les bits B2 et B3 dans le champ de classe CLA sont "11". La carte CA, SIM de l'invention est ainsi adaptée à divers algorithmes de décompression qui sont respectivement choisis par divers prestataires de service responsables de la gestion d'ensembles des terminaux TE, ou d'ensembles de terminaux TM avec des serveurs SC.

En variante, la carte à puce CA (figure 1), SIM comprend encore une mémoire RAM MM reliée au bus B. Des caractéristiques d'un modèle de décompression incluses dans des trames de commande (non compressées) entrantes précédant les trames TR avec des données compressées selon ce modèle, sont transmises par le terminal TE ou le serveur SC à travers le support ST et sont écrites dans la mémoire MM par le processeur PR. L'algorithme mettant en oeuvre ce modèle inscrit en mémoire MM sera alors recherché dans la mémoire MS par le processeur pour décompresser les données.

Selon une autre variante, parmi les algorithmes AL0 à ALI, certains d'entres eux sont associés à des modèles de décompression dont les caractéristiques ne sont pas stockées préalablement dans la mémoire ROM MS de la carte CA, SIM. Un tel modèle de décompression est reconstruit au moyen de l'algorithme de décompression correspondant dans le processeur PR au fur et à mesure de l'écriture de la trame de données compressées en mémoire MC et est écrit dans la mémoire RAM MM afin de le lire lors de la décompression des données compressées. Le modèle de décompression est selon cette variante contenu implicitement dans la trame de données compressées.

Le champ de paramètres de décompression PD dans une trame à données compressées contient un dernier mot à n bits LDD qui indique à la carte CA, SIM la longueur attendue des données décompressées modulo 2ⁿ, où n est un entier supérieur ou égal à 2. Les données initialement non compressées dans le terminal TE ou le serveur SC auxquelles correspondent les données décompressées dans la carte CA, SIM sont traitées en mots de données à m bits, m étant un entier supérieur ou égal à 1. La longueur attendue des données est exprimée en mots de données à m bits, et le mot LDD indique le nombre de mots de données dans. le dernier champ à au plus 2ⁿ mots de données dans la trame qui ont été compressés. Selon la réalisation illustrée à la figure 4, l'entier n est égal à 3, en général supérieur ou égal à 0, les mots à m bits sont des octets de données décompressées avec m = 8, et le mot de longueur attendue des données décompressées LDD contient 3 bits et est égal au reste de la division de la longueur attendue de données décompressées par 2ⁿ = 8.

Grâce au paramètre de longueur de données décompressées LDD, le processeur PR dans la carte à puce CA, SIM arrête la décompression des données juste à la fin des données reçues à décompresser. Par exemple selon certains algorithmes de décompression, tel qu'un algorithme de type Huffman, plusieurs symboles peuvent être codés sur un mot à m bits, en l'occurrence un octet pour m = 8. La décompression des symboles doit s'arrêter à la fin de la trame décompressée qui peut intervenir au premier symbole au début du dernier octet ; les bits suivants à la fin de cet octet ne sont pas des données mais des bits de bourrage qui sont introduits dans la carte après avoir compté précisément le nombre de bits des données décompressées selon la précision indiquée par le paramètre LDD en parallèle avec la longueur de données compressées LC.

Selon une autre variante, la précision de la longueur des données décompressées peut atteindre le bit, lorsque m = 1 ; par exemple pour n = 8, le paramètre LDD indique le nombre de bits de données attendus dans le dernier octet inclus dans la trame.

Le paramètre LDD est également utile lorsque plusieurs tramés "T = 0", ou des trames normalisées de données entrantes selon le protocole de transmission asynchrone bloc par bloc "T = 1", dites unités de données de protocole applicatif APDU, doivent être concaténées pour constituer un fichier. Le début d'une trame doit succéder précisément à la fin de la trame précédente, c'est-à-dire au dernier octet de données décompressées. Cette segmentation de fichier au niveau du dernier octet de la trame précédente est signalée précisément par le paramètre LDD.

Au lieu que la longueur attendue soit exprimée par le reste de la division par 2ⁿ, elle pourrait être introduite complètement dans l'en-tête de la trame TR selon l'invention. Cependant, cette introduction ajouterait un mot supplémentaire dans l'en-tête ET de la trame TR, la longueur attendue pouvant être alors supérieure à 2⁸ = 256 octets. En outre un troisième bit serait nécessaire dans le champ de classe CLA pour décliner tous les cas.

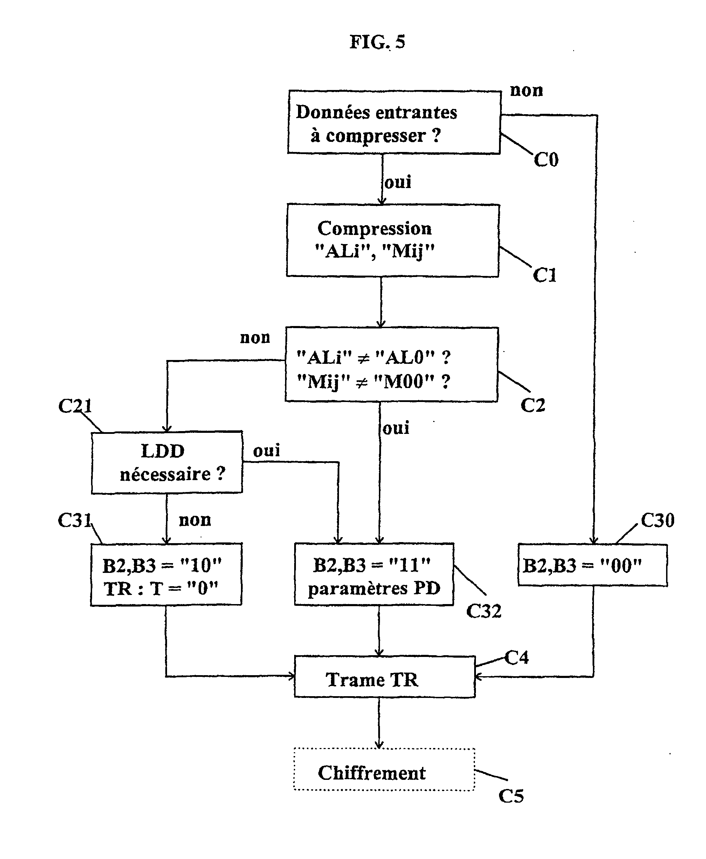

Un procédé de compression en conformité avec l'invention est montré à la figure 5. Il comprend principalement 5 étapes C0 à C4 réalisées dans le terminal TE ou le serveur SC.

Lorsqu'en fonction d'instructions protocolaires à l'étape C0, les données entrantes dans le terminal T ou le serveur SC ne sont pas compressées, les bits B2 et B3 sont mis à l'état "00" à une étape C30 succédant à une étape initiale C0.

Si les données entrantes doivent être compressées à l'étape C0, le terminal TE ou le serveur SC compresse les données entrantes à l'étape suivante Cl selon un algorithme de compression "ALi" et un modèle de compression correspondant "Mij" préinstallés dans le terminal TE ou le serveur SC. Si l'algorithme "ALi" et le module "Mij" sont l'algorithme de compression prédéterminé "AL0" et le modèle de compression prédéterminé "M00" et si la décompression ne nécessite pas à l'étape C21 de connaître l'indication sur la longueur de données décompressées LDD dans la mesure où la compression s'est arrêtée sur un nombre entier de mots de données à n bits, les bits B2 et B3 sont mis respectivement à l'état "10" à l'étape C31. Dans les cas contraires aux étapes C2 et C21, le paramètre LDD est nécessaire, et les bits B2 et B3 sont mis à l'état "11" à l'étape C32. Le champ de paramètres de décompression PD est constitué avec le numéro ALi et Mij des algorithme et modèle ayant servis à la compression des données et avec la longueur attendue des données avant compression, modulo 2ⁿ.

Puis à l'étape suivante C4, que les données soient compressées ou pas compressées, la trame TR à transmettre est finalement constituée. Optionnellement, l'ensemble de la trame, ou bien seulement le champ de données DATA, est chiffré à une étape C5.

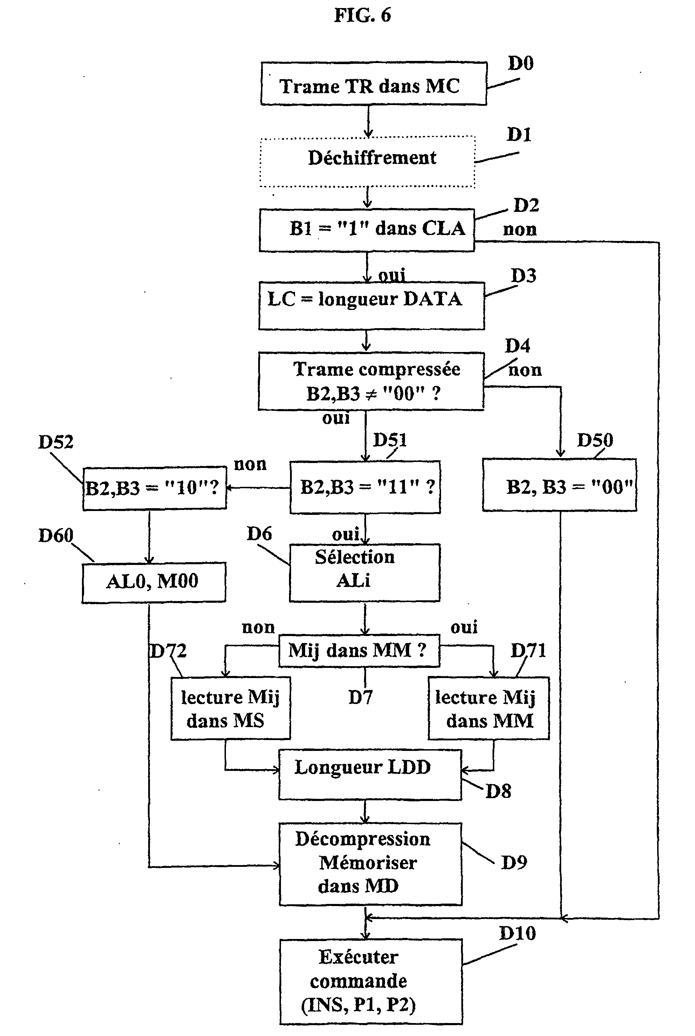

Comme montré à la figure 6, la décompression de données dans la carte PC, SIM comprend neuf étapes D0 à D10. A l'étape initiale D0, la trame TR reçue selon une transmission asynchrone est écrite dans la mémoire tampon RAM MC dans la carte. Optionnellement, si les trames TR ou les données DATA incluses dans cette trame ont été chiffrées dans le terminal TE ou le serveur SC, le processeur PR de la carte exécute un déchiffrement de chaque trame reçue et écrite dans la mémoire tampon RAM à l'étape D1. Le processeur PR valide ensuite à l'étape D2 la trame reçue TR en tant que trame normalisée lorsque le bit de poids fort B1 dans le champ de classe CLA est à l'état "1" ; sinon lorsque la trame est reçue avec B1 = "0", le procédé passe de l'étape D2 à l'étape D10. La longueur du champ de données DATA lue dans le champ LC à l'étape D3 fixe l'arrêt de l'écriture des données dans la mémoire MC.

A l'étape suivante D4, lès deuxième et troisième bits B2 et B3 dans le champ CLA de la trame reçue TR sont lus. Si ces deux bits sont égaux à "00" comme indiqué à l'étape D50, aucune décompression de données n'est exécutée et le procédé passe directement à la dernière étape D10. Dans le cas contraire, les données DATA doivent être décompressées et le procédé passe à l'étape D51 pour distinguer les trames sans et avec champ de paramètres de décompression PD.

Si à l'étape D51, les bits B2 et B3 ne sont pas respectivement égaux à "11", ils sont égaux à "10" à l'étape D52. Le système d'exploitation OS sélectionne d'office les algorithme et modèle de décompression prédéterminés AL0 et M00 dans la mémoire MS à l'étape D60, puis exécute la décompression des données DATA et écrit les données décompressées dans la mémoire MD à l'étape D9. La fin de la décompression est estimée en fonction de la longueur LC du champ DATA.

Lorsque les bits B2 et B3 sont respectivement "11" à l'étape D51, le système d'exploitation OS va sélectionner les algorithme et modèle de décompression. L'algorithme de décompression ALi indiqué par les deux premiers bits du champ de paramètres de décompression PD inclus dans la trame reçue TR est sélectionné dans la mémoire ROM MS de la carte à l'étape D6. Le modèle de décompression correspondant Mij est lu dans la mémoire RAM MM aux étapes D7 et D71, si des caractéristiques du modèle Mij ont été reçues préalablement à la réception de la trame TR ou déduites implicitement au début de la réception de la trame TR. Dans le cas contraire, les trois bits de modèle dans le champ PD de la trame reçue sont lus pour sélectionner le modèle Mij dans la mémoire ROM MS aux étapes D7 et D72. Puis après l'étape D71 ou D72, le mot LDD à n bits inclus à la fin du champ de paramètres de décompression PD est lu à l'étape D8 par le système d'exploitation OS afin qu'à l'étape D9 le processeur PR exécute la décompression des données contenues dans le champ DATA de la trame reçue TR et arrête cette décompression en fonction notamment du mot LDD lu précédemment. Les données décompressées sont écrites au fur et à mesure dans la mémoire RAM MD.

En fonction de l'instruction contenue dans le champ INS et des paramètres P1, P2 précisant cette instruction dans la trame reçue TR, le système d'exploitation OS exécute à l'étape D10 une commande déterminée, comme par exemple la recopie des données décompressées contenues dans la mémoire MD en mémoire EEPROM de la carte, à une adresse de fichier donnée. A ce stade, le système d'exploitation dans la carte se retrouve exactement dans la situation qu'il rencontrerait dans une carte normalisée, si les données reçues n'avaient pas été compressées selon l'invention

A titre d'exemple, l'en-tête ET contenu dans une trame de données compressées TR est le suivant :
CLA = "E8" ; INS = "D0" ; P1 = "03" ; P2 = "20" ; LC = "23" et PD = "B6",
tous ces octets étant en code hexadécimal.

Dans cet exemple, la première moitié du champ CLA est égale à "1110", soit B2 = "1" et B3 = "1", ce qui signifie que les données DATA ont été compressées avec un algorithme et un modèle autre que l'algorithme "AL0" et le modèle "M00". Selon le champ LC, les données DATA après compression s'étendent sur (16x2+3) = 35 octets. La décompression est effectuée selon l'algorithme AL2 et le modèle correspondant M26 dont les numéros sont lus dans les cinq premiers bits "10110" du champ de paramètres de décompression PD. La longueur attendue des données décompressées LDD contient un nombre entier de groupes de 8 octets + 3 octets selon les trois derniers bits LDD = "011" du champ PD de la trame TR.

Dans l'autre sens de transmission, de la carte CA, SIM vers le terminal TE, TM, les données ne sont pas initialement compressées et sont encapsulées par la carte dans des trames normalisées "T = 0", ou éventuellement "T = 1".

## Revendications

1. Carte à puce (CA, SIM) propre à recevoir des champs de données compressées (DATA) précédés chacun par une indication de longueur attendue de données décompressées (LDD) et une longueur de données compressées (LC), caractérisée en qu'elle comprend un premier moyen (MC) pour mémoriser les champs reçus de données compressées (DATA, TR) en fonction des longueurs des données compressées (LC) respectives, un deuxième moyen (MS) pour mémoriser un algorithme de décompression, un moyen (PR) pour décompresser suivant ledit algorithme de décompression les données compressées dans chaque champ en des données décompressées sur une longueur dépendant de l'indication de longueur de données attendue décompressées (LDD), et un troisième moyen (MD) pour mémoriser les données décompressées.

2. Carte à puce conforme à la revendication 1, dans laquelle le deuxième moyen pour mémoriser (MS) contient plusieurs algorithmes de décompression (AL0 à ALI), et le moyen pour décompresser (PR) détecte un numéro d'algorithme de décompression (ALi) précédant chaque champ reçu de données compressées afin que celles-ci soient décompressées suivant l'algorithme de décompression dont le numéro a été détecté.

3. Carte à puce conforme à la revendication 2, dans laquelle le deuxième moyen pour mémoriser (MS) comprend plusieurs modèles de décompression (Mi0 à MiJ) respectivement associés aux algorithmes de décompression (AL0 à ALI), et le moyen pour décompresser (PR) détecte un numéro de modèle de décompression (Mij) précédant chaque champ reçu de données compressées afin que celles-ci soient décompressées suivant l'algorithme de décompression et le modèle de décompression correspondant dont les numéros ont été détectés.

4. Carte à puce conforme à la revendication 2, comprenant un quatrième moyen (MM) pour mémoriser un modèle de décompression reçu précédemment à un champ reçu de données compressées, et le moyen pour décompresser (PR) détecte un numéro d'algorithme de décompression (ALi) précédant ledit champ reçu de données compressées afin que celles-ci soient décompressées suivant l'algorithme de décompression dont le numéro a été détecté et le modèle de décompression lu dans le quatrième moyen pour mémoriser (MM).

5. Carte à puce conforme à la revendication 2, comprenant un quatrième moyen (MM) pour mémoriser un modèle de décompression déduit implicitement d'un champ de données compressées en cours d'écriture dans les premiers moyens pour mémoriser (MC), et le moyen pour décompresser (PR) détecte un numéro d'algorithme de décompression (ALi) précédant ledit champ mémorisé de données compressées afin que celles-ci soient décompressées suivant l'algorithme de décompression dont le numéro a été détecté et le modèle de décompression déduit lu dans le quatrième moyen pour mémoriser (MM).

6. Carte à puce conforme à l'une quelconque des revendications 1 à 5, dans laquelle le moyen pour décompresser (PR) détecte une indication (CLA : B2, B3) sur l'état compressé ou non compressé de chaque champ reçu de données compressées afin que le moyen pour décompresser (PR) ne décompresse les données que dans les champs de données précédés par une indication d'état compressé.

7. Unité de données de protocole pour être reçue notamment par la carte à puce selon l'une quelconque des revendications 1 à 6, comprenant un en-tête (ET) et un champ de données (DATA), l'en-tête incluant la longueur (LC) du champ de données, **caractérisée en ce que** l'en-tête (ET) comprend une indication (LDD) sur la longueur attendue de données décompressées après décompression du champ de données (DATA).

8. Unité de données de protocole conforme à la revendication 7, dans laquelle l'indication sur la longueur attendue de données décompressées (LDD) est un mot à n bits égal à la longueur attendue des données décompressées modulo 2ⁿ, la longueur attendue étant exprimée en mots de données décompressées à m bits, n étant un entier au moins égal à 0 et m étant un entier au moins égal à 1.

9. Unité de données de protocole conforme à la revendication 7 ou 8, dans laquelle l'en-tête (ET) comprend le numéro (ALi) d'un algorithme de décompression au moyen duquel les données compressées dans le champ de données (DATA) sont à décompresser.

10. Unité de données de protocole conforme à la revendication 9, dans laquelle l'en-tête (ET) comprend le numéro (Mij) d'un modèle de décompression qui correspond à l'algorithme de décompression dont le numéro (ALi) est inclus dans l'en-tête et au moyen duquel les données compressées dans le champ de données (DATA) sont à décompresser.

11. Unité de données de protocole conforme à l'une quelconque des revendications 7 à 10, dans laquelle l'en-tête (ET) comprend une indication d'état de données (B1, B2) ayant un premier état (DATA) lorsque les données dans le champ de données ne sont pas compressées, et ayant un deuxième état lorsque les données dans le champ de données (DATA) sont compressées.

12. Unité de données de protocole conforme à la revendication 11, dans laquelle l'indication d'état de données (B1, B2) a un troisième état lorsque les données dans le champ de données (DATA) sont à décompresser suivant un algorithme de décompression prédéterminé (AL0) et un modèle de décompression prédéterminé (M00).

13. Unité de données de protocole conforme à la revendication 11 ou 12, dans laquelle l'en-tête (ET) comprend le numéro d'un algorithme de décompression (ALi), le numéro d'un modèle de décompression (Mij) et l'indication sur la longueur attendue de données décompressées (LDD) lorsque l'indication d'état de données (B1, B2) est au deuxième état.

14. Procédé pour décompresser des champs de données compressées (DATA) à mettre en oeuvre notamment dans la carte à puce conforme à l'une quelconque des revendications 1 à 6, chaque champ de données compressées étant précédé par une indication sur la longueur attendue (LDD) de données décompressées correspondant à des données compressées contenues dans le champ et par une longueur (LC) des données compressées contenues dans le champ, **caractérisée par** les étapes suivantes :
- détecter (D3) la longueur (LC) des données compressées et mémoriser (D0) le champ de données compressées (DATA) sur la longueur détectée, et
- détecter (D8) l'indication sur la longueur attendue de données décompressées (LDD) et décompresser (D9) les données de manière à arrêter la décompression en fonction de l'indication détectée (LDD).

15. Procédé conforme à la revendication 14, comprenant une étape de sélectionner (D6) un algorithme de décompression (ALi) parmi plusieurs algorithmes de décompression (AL0 à ALI) en fonction d'un numéro d'algorithme précédant le champ de données compressées afin de décompresser les données du champ suivant l'algorithme de décompression sélectionné.

16. Procédé conforme à la revendication 15, comprenant une étape de sélectionner (D7, D72) un modèle de décompression (Mij) parmi plusieurs modèles de décompression (Mi0 à MiJ) associés à l'algorithme de décompression sélectionné en fonction d'un numéro de modèle précédant le champ de données compressées afin de décompresser les données du champ suivant l'algorithme de décompression sélectionné et le modèle de décompression sélectionné.

17. Procédé conforme à la revendication 15, comprenant une étape de mémoriser (D71) un modèle de décompression (Mij) reçu précédemment au champ de données compressées (DATA) afin de décompresser les données du champ suivant l'algorithme de décompression sélectionné et le modèle de décompression mémorisé.

18. Procédé conforme à la revendication 15, comprenant une étape de mémoriser (D71) un modèle de décompression (Mij) déduit implicitement du champ reçu de données compressées (DATA) afin de décompresser les données du champ suivant l'algorithme de décompression sélectionné et le modèle de décompression déduit et mémorisé.

19. Procédé conforme à l'une quelconque des revendications 14 à 18, comprenant une étape (D4, D50, D51, D52) de détecter une indication d'état de données (B2, B3) précédant chaque champ de données décompressées afin de ne décompresser les données du champ que lorsque l'indication d'état de données n'est pas à un premier état prédéterminé.

20. Procédé conforme à la revendication 19, selon lequel l'étape (D8) de détecter une indication sur la longueur attendue de données décompressées (LDD) n'est pas effectuée lorsque l'indication d'état de données (B2, B3) est à un état prédéterminé indiquant que les données compressées sont à décompresser selon des algorithme et modèle prédéterminés (AL0, M00).

## Patentansprüche

1. Zur Aufnahme von Zonen komprimierter Daten geeignete Chipkarte (CA, SIM), von denen jeder eine erwartete Längenangabe dekomprimierter Daten (LDD) und eine Länge komprimierter Daten (LC) voransteht, **dadurch gekennzeichnet, dass** sie in Abhängigkeit der jeweiligen Längen der komprimierten Daten (LC) ein erstes Mittel (MC) zur Speicherung der von komprimierten Daten (DATA, TR) empfangenen Zonen enthält, ein zweites Mittel (MS) zur Speicherung eines Dekomprimierungs-Algorithmus, ein Mittel (PR) zum Dekomprimieren der komprimierten Daten in jeder Zone in dekomprimierte Daten gemäß des besagten Dekomprimierungs-Algorithmus auf eine von der erwarteten Längenangabe dekomprimierter Daten (LDD) abhängigen Länge, und ein drittes Mittel (MD) zum Speichern der dekomprimierten Daten.

2. Chipkarte gemäß Anspruch 1, in der das zweite Mittel zum Speichern (MS) mehrere Dekomprimierungs-Algorithmen (AL0 bis ALI) enthält, und das Mittel zum Dekomprimieren (PR) eine jeder empfangenen Zone komprimierter Daten voranstehende Dekomprimierungs-Algorithmus-Nummer (Ali) feststellt, damit diese Daten gemäß des Dekomprimierungs-Algorithmus, dessen Nummer festgestellt wurde, dekomprimiert werden.

3. Chipkarte gemäß Anspruch 2, in der das zweite Mittel zum Speichern (MS) mehrere, jeweils den Dekomprimierungs-Algorithmen (AL0 bis ALI) zugeordnete Dekomprimierungs-Modelle (Mi0 bis MiJ) enthält, und das Mittel zum Dekomprimieren (PR) eine jeder empfangenen Zone komprimierter Daten voranstehende Dekomprimierungs-Modell-Nummer (Mij) feststellt, damit diese Daten gemäß des Dekomprimierungs-Algorithmus und des entsprechenden Dekomprimierungs-Modells dekomprimiert werden, deren Nummern festgestellt wurden.

4. Chipkarte gemäß Anspruch 2, mit einem vierten Mittel (MM) zum Speichern einer zuvor von einem empfangenen Zone komprimierter Daten empfangenen Dekomprimierungs-Modells, und das Mittel zum Dekomprimieren (PR) stellt eine der besagten empfangenen Zone komprimierter Daten voranstehende Dekomprimierungs-Algorithmus-Nummer (Ali) fest, damit diese Daten gemäß eines Dekomprimierungs-Algorithmus, dessen Nummer festgestellt wurde, und des im vierten Mittel zum Speichern (MM) gelesenen Dekomprimierungs-modells dekomprimiert werden.

5. Chipkarte gemäß Anspruch 2, mit einem vierten Mittel (MM) zum Speichern eines Dekomprimierungs-Modells, das implizit von einer Zone komprimierter Daten im Schreibverlauf in den ersten Mitteln zum Speichern (MC) abgeleitet wird, und das Mittel zum Dekomprimieren (PR) stellt eine der besagten gespeicherten Zone komprimierter Daten voranstehende Dekomprimierungs-Algorithmus-Nummer (ALi) fest, damit diese Daten gemäß eines Dekomprimierungs-Algorithmus, dessen Nummer festgestellt wurde, und des im vierten Mittel zum Speichern (MM) gelesenen Dekomprimierungs-Modells dekomprimiert werden.

6. Chipkarte gemäß Anspruch 1 bis 5, in der das Mittel zum Dekomprimieren (PR) eine Angabe (CLA: B2, B3) auf dem komprimierten oder nicht komprimierten Zustand jeder empfangene Zone komprimierter Daten feststellt, damit das Mittel zum Dekomprimieren (PR) die Daten nur in den Zonen von Daten dekomprimiert, denen eine Angabe eines komprimierten Zustandes voransteht.

7. Protokolldateneinheit zur Aufnahme insbesondere durch die Chipkarte gemäß Anspruch 1 bis 6, mit einer Kopfzeile (ET) und einem Datenfeld (DATA), wobei die Kopfzeile die Länge (LC) der Datenzone beinhaltet, **dadurch gekennzeichnet, dass** die Kopfzeile (ET) eine Angabe (LDD) über die erwartete Länge komprimierter Daten nach dem Dekomprimieren der Datenzone (DATA) enthält.

8. Protokolldateneinheit gemäß Anspruch 7, in der die Angabe über die erwartete Länge dekomprimierter Daten (LDD) ein Wort von n Bits gleich der erwarteten Länge der dekomprimierten Daten Modulo 2ⁿ ist, wobei die erwartete Länge in Worten dekomprimierter Daten von m Bits ausgedrückt wird, wobei n eine ganze Zahl von wenigstens gleich 0 und m eine ganze Zahl von wenigstens gleich 1 ist.

9. Protokolldateneinheit gemäß Anspruch 7 oder 8, in der die Kopfzeile (ET) die Nummer (ALi) eines Dekomprimierungs-Algorithmus umfasst, durch den die komprimierten Daten in der Datenzone (DATA) zu dekomprimieren sind.

10. Protokolldateneinheit gemäß Anspruch 9, in der die Kopfzeile (ET) die Nummer (Mij) eines Dekomprimierungsmodells beinhaltet, das dem Dekomprimierungs-Algorithmus entspricht; dessen Nummer (ALi) in der Kopfzeile inbegriffen ist und durch den die komprimierten Daten in der Datenzone (DATA) zu dekomprimieren sind.

11. Protokolldateneinheit gemäß Anspruch 7 bis 10, in der die Kopfzeile (ET) eine Angabe des Datenzustandes (B1, B2) mit einem ersten Zustand umfasst, wenn die Daten in der Datenzone nicht komprimiert sind, und mit einem zweiten Zustand, wenn die Daten in der Datenzone (DATEN) komprimiert sind.

12. Protokolldateneinheit gemäß Anspruch 11, in der die Angabe des Datenzustandes (B1, B2) einen dritten Zustand hat, wenn die Daten in der Datenzone (DATA) gemäß eines vorbestimmten (AL0) Dekomprimierungs-Algorithmus und eines vorbestimmten (M00) Dekomprimierungs-Modells zu dekomprimieren sind.

13. Protokolldateneinheit gemäß Anspruch 11 oder 12, in der die Kopfzeile (ET) die Nummer eines Dekomprimierungs-Algorithmus (ALi), die Nummer eines Dekomprimierungs-Modells (Mij) und die Angabe über die erwartete Länge dekomprimierter Daten (LDD) beinhaltet, wenn die Angabe des Datenzustandes (B1, B2) im zweiten Zustand ist.

14. Insbesondere in der Chipkarte gemäß Anspruch 1 bis 6 umzusetzendes Verfahren zum Dekomprimieren der komprimierten Datenzonen (DATA), wobei jede Zone komprimierter Daten eine Angabe über die erwartete Länge (LDD) komprimierter Daten voransteht, die komprimierten, in der Zone enthaltenen Daten entspricht, sowie einer Länge (LC) der in der Zone enthaltenen komprimierten Daten, **gekennzeichnet durch** die folgenden Schritte:
- Feststellen (D3) der Länge (LC) der komprimierten Daten und Speichern (D0) der Zone komprimierter Daten (DATA) über die festgestellte Länge, und
- Feststellen (D8) der Angabe über die erwartete Länge dekomprimierter Daten (LDD) und Dekomprimieren (D9) der Daten, so dass das Dekomprimieren in Abhängigkeit von der festgestellten Angabe (LDD) beendet wird.

15. Verfahren gemäß Anspruch 14, umfassend einen Schritt zum Auswählen (D6) eines Dekomprimierungs-Algorithmus (ALi) unter mehreren Dekomprimierungs-Algorithmen (AL0 bis ALI) in Abhängigkeit einer der Zone komprimierter Daten voranstehender Algorithmus-Nummer, damit die Daten der Zone gemäß des ausgewählten Dekomprimierungs-Algorithmus dekomprimiert werden.

16. Verfahren gemäß Anspruch 15, umfassend einen Schritt zum Auswählen (D7, D72) eines Dekomprimierungs-Modells unter mehreren, dem ausgewählten Dekomprimierungs-Algorithmus in Abhängigkeit einer der Zone komprimierter Daten voranstehende Modell-Nummer zugeordneten Dekomprimierungs-Modellen (Mi0 bis MiJ), um die Daten der Zone gemäß des ausgewählten Dekomprimierungs-Algorithmus und des ausgewählten Dekomprimierungs-Modells zu dekomprimieren.

17. Verfahren gemäß Anspruch 15, umfassend einen Schritt zum Speichern (D71) eines zuvor in der Zone komprimierter Daten (DATA) empfangenen Dekomprimierungs-Modells (Mij) zum Dekomprimieren der Zone gemäß des ausgewählten Dekomprimierungs-Algorithmus und des gespeicherten Dekomprimierungs-Modells.

18. Verfahren gemäß Anspruch 15, umfassend einen Schritt zum Speichern (D71) eines implizit aus der empfangenen Zone komprimierter Daten (DATA) abgeleiteten Dekomprimierungs-Modells (Mij), um die Daten der Zone gemäß des ausgewählten Dekomprimierungs-Algorithmus und des abgeleiteten und gespeicherten Dekomprimierungs-Modells zu dekomprimieren.

19. Verfahren gemäß Anspruch 14 bis 18, umfassend einen Schritt (D4, D50, D51, D52) zum Feststellen einer jeder Zone dekomprimierter Daten voranstehenden Angabe zu Datenzuständen (B2, B3), um die Daten der Zone nur zu dekomprimieren, wenn die Angabe über den Datenzustand nicht in einem ersten vorbestimmten Zustand ist.

20. Verfahren gemäß Anspruch 19, nach dem der Schritt (D8) zum Feststellen einer Angabe über die erwartete Länge dekomprimierter Daten (LDD) nicht ausgeführt wird, wenn die Angabe über den Datenzustand (B2, B3) ein vorbestimmter Zustand ist, der angibt, dass die komprimierten Daten gemäß eines vorbestimmten Algorithmen und Modells (Al0, M00) zu dekomprimieren sind.

## Claims

1. A smart card (CA, SIM) able to receive compressed data fields (DATA) each preceded by an indication of expected length of decompressed data (LDD) and a compressed data length (LC), **characterised in that** it comprises a first means (MC) for storing the received compressed data fields (DATA, TR) according to the respective compressed data lengths (LC), a second means (MS) for storing a decompression algorithm, a means (PR) for decompressing according to the said algorithm for decompressing the compressed data in each field into decompressed data over a length depending on the decompressed data length indication (LDD), and a third means (MD) for storing the decompressed data.

2. A smart card according to Claim 1, in which the second means for storing (MS) contain several decompression algorithms (AL0 to ALi), and the means for decompressing (PR) detects a decompression algorithm number (ALi) preceding each received field of compressed data so that these are decompressed according to the decompression algorithm whose number was detected.

3. A smart card according to Claim 2, in which the second means for storing (MS) comprises several decompression models (Mi0 to MiJ) respectively associated with the decompression algorithms (AL0 to ALi), and the means for decompressing (PR) detects a decompression model number (Mij) preceding each received field of compressed data so that these are decompressed according to the decompression algorithm and the corresponding decompression model whose numbers were detected.

4. A smart card according to Claim 2, comprising a fourth means (MM) for storing a decompression model received previously to a received compressed data field, and the means for decompressing (PR) detects a decompression algorithm number (ALi) preceding the said received field of compressed data so that these are decompressed according to the decompression algorithm whose number was detected and the decompression model read in the fourth means for storing (MM).

5. A smart card according to Claim 2, comprising a fourth means (MM) for storing a decompression model deduced implicitly from a compressed data field currently being written in the first means for storing (MC), and the means for decompressing (PR) detects a decompression algorithm number (ALi) preceding the said stored field of compressed data so that these are decompressed according to the decompression algorithm whose number was detected and the deduced decompression model read in the fourth means for storing (MM).

6. A smart card according to any one of Claims 1 to 5, in which the means for decompressing (PR) detects an indication (CLA: B2, B3) on the compressed or non-compressed state of each received compressed data field so that the means for decompressing (PR) decompresses the data only in the data fields preceded by a compressed state indication.

7. A protocol data unit for being received in particular by the smart card according to any one of Claims 1 to 6, comprising a header (ET) and a data field (DATA), the header including the length (LC) of the data field, **characterised in that** the header (ET) comprises an indication (LDD) on the expected decompressed data length after decompression of the data field (DATA).

8. A protocol data unit according to Claim 7, in which the indication on the expected decompressed data length (LDD) is an n-bit word equal to the expected length of the decompressed data modulo 2ⁿ, the expected length being expressed in terms of decompressed data words with m bits, n being an integer equal to at least 0 and m being an integer equal to at least 1.

9. A protocol data unit according to Claim 7 or 8, in which the header (ET) comprises the number (ALi) of a decompression algorithm by means of which the compressed data in the data field (DATA) are to be decompressed.

10. A protocol data unit according to Claim 9, in which the header (ET) comprises the number (Mij) of a decompression model which corresponds to the decompression algorithm whose number (ALi) is included in the header and by means of which the compressed data in the data field (DATA) are to be decompressed.

11. A protocol data unit according to any one of Claims 7 to 10, in which the header (ET) comprises a data state indication (B1, B2) having a first state (DATA) when the data in the data field are not compressed, and having a second state when the data in the data field (DATA) are compressed.

12. A protocol data unit according to Claim 11, in which the data state indication (B1, B2) has a third state when the data in the data field (DATA) are to be decompressed according to a predetermined decompression algorithm (AL0) and a predetermined decompression model (M00).

13. A protocol data unit according to Claim 11 or 12, in which the header (ET) comprises the number of a decompression algorithm (ALi), the number of a decompression model (Mij) and the indication on the expected decompressed data length (LDD) when a data state indication (B1, B2) is at the second state.

14. A method for decompressing compressed data fields (DATA) to be used in particular in the smart card according to any one of Claims 1 to 6, each compressed data field being preceded by an indication on the expected decompressed data length (LDD) corresponding to compressed data contained in the field and by a length (LC) of the compressed data contained in the field, **characterised by** the following steps:
- detecting (D3) the length (LC) of the compressed data and storing (D0) the compressed data field (DATA) over the detected length, and
- detecting (D8) the indication on the expected decompressed data length (LDD) and decompressing (D9) the data so as to stop the decompression according to the detected indication (LDD).

15. A method according to Claim 14, comprising a step of selecting (D6) a decompression algorithm (ALi) amongst several decompression algorithms (AL0 to ALi) according to an algorithm number preceding the compressed data field in order to decompress the data of the field according to the decompression algorithm selected.

16. A method according to Claim 15, comprising a step of selecting (D7, D72) a decompression model (Mij) amongst several decompression models (Mi0 to MiJ) associated with the decompression algorithm selected according to a model number preceding the compressed data field in order to decompress the data of the field according to the selected decompression algorithm and the selected decompression model.

17. A method according to Claim 15, containing a step of storing (D71) a decompression model (Mij) received previously to the compressed data field (DATA) in order to decompress the data of the field according to the decompression algorithm selected and the decompression model stored.

18. A method according to Claim 15, comprising a step of storing (D71) a decompression model (Mij) deduced implicitly from the received compressed data field (DATA) in order to decompress the data of the field according to the decompression algorithm selected and the decompression model deduced and stored.

19. A method according to any one of Claims 14 to 18, comprising a step (D4, D50, D51, D52) of detecting a data state indication (B2, B3) preceding each decompressed data field in order to decompress the data of the field only when the data state indication is not at a first predetermined state.

20. A method according to Claim 19, according to which the step (D8) of detecting an indication on the expected length of decompressed data (LDD) is not performed when the data state indication (B2, B3) is at a predetermined state indicating that the compressed data are to be decompressed according to a predetermined algorithm and model (AL0, M00).
